# EUROPEAN PATENT SPECIFICATION

(11) **EP 1 504 329 B1**
(45) Date of publication and mention of the grant of the patent: **08.04.2009**
(21) Application number: 03733608.8
(22) Date of filing: 15.05.2003
(51) Int. Cl.: G06F 3/00

(54) **CHAIR WITH MEANS FOR CONTROLLING A CURSOR**
STUHL MIT MITTELN ZUR STEUERUNG EINES KURSORS
CHAISE EQUIPEE DE MOYENS DE COMMANDE D'UN CURSEUR

(30) Priority: 16.05.2002 NL 1020615
(43) Date of publication of application: 09.02.2005
(73) Proprietor: Marvida KG, 67227 Frankenthal (DE)
(72) Inventor: Van der Laan, Eric Albert, 67227 Frankenthal (DE)
(74) Representative: Katscher Habermann Patentanwälte
(86) International application number: PCT/NL2003/000358
(87) International publication number: WO 2003/098419

(56) References cited:
- DE-U- 29 612 734
- US-A- 4 580 006
- US-A- 5 885 003
- US-A- 5 909 208
- US-B1- 6 334 837

## Description

The invention relates to a chair comprising at least a chassis; and a seat, as well as means suitable for converting chair movements into control signals for controlling a cursor (pointer) on a display screen.

Such a chair is known from US Patent No. US-A-5,909,208 in the name of Mr Blomdahl, it provides means which converts rotary movement and tilting movement of the chair into control signals, which may be used for controlling a cursor (mouse pointer) on a display screen of, for example, a computer. Said control means are intended to prevent injuries caused by intensive computer use, which injuries are known by the general designation "mouse problem" or RSI (Repetitive Strain Injury).

RSI or Repetitive Strain Injury is a collective term used for a number of physical complaints in the muscles, tendons and nerves of in particular the arms and the upper part of the body of computer workers. Although in particular the national authorities have recognised the problem of RSI for a number of years and have been taking direct action in the form of giving advice and taking RSI-reducing measures, for example by providing ergonomic aids, the occurrence of RSI and the related physical complaints form an ever increasing problem. The aforesaid patent aims at providing an ergonomic solution so as to reduce or prevent the occurrence of RSI among computer workers and even to provide a cure in those cases where it should occur.

RSI complaints can roughly be traced back to an ergonomically wrong seating position of the person in the chair in front of the display screen of a computer. A hunched position of the upper part of the body not only leads to an obstruction of the airways and thus to a less optimum uptake of oxygen in the blood, but it also causes the nerves and the blood vessels to the arms (thoracic outlet) to be pinched. These two causes are primary factors that contribute towards an insufficient supply of blood and oxygen to the arms and in particular to the hands by means of which a generally known mouse pointer is controlled.

Furthermore, a constantly repeated movement of the index finger on one of the control buttons of the mouse pointer leads to an increased friction of the tendons in the tendon sheaths of the hand. Also the pressure of the wrist resting on the supporting surface leads to an increased compression of the tendons and the tendon sheaths, thus increasing the risk of tissue injury. When the mouse pointer is controlled in this starting position, dorsal flexion and ulnar abduction of the wrist take place, which is an ergonomically unfavourable position and which leads to an abnormal strain on the tendons and the tendon sheaths in the wrist joint.

Another drawback in particular of the aforesaid US Patent No. US-A-5,909,208 is connected with the chair that is used in said patent, which chair leads to an undesirable and unnecessary strain on the vertebral column and the upper extremities (the neck and the arms) due to the fact that the person remains in the same seating position too long. All in all, the above causes lead to an inadequate transport of blood and oxygen to the arms, as a result of which an ergonomically unacceptable strain is placed in particular on the muscles and the nerves thereof.

The object of the present invention is precisely to provide a chair which is to prevent all kinds of physical complaints that can be reduced to RSI, which chair does not have the drawbacks of the chair that is known from US-A-5,909,208.

In order to accomplish that objective, the chair is according to the invention characterized in that the seat comprises a convex part, which part can be movably accommodated in a corresponding part of the chassis having a complementary concave shape, and in that the means for controlling the cursor are at least in part disposed at the location of the mating area between said convex and concave parts.

Said construction not only relieves some of the strain on the arm used for operating the mouse, but in addition this construction of the seat and the chassis has a positive influence on the seating position of the person seated on the chair in question, as a result of which in particular the oxygen uptake by the lungs and consequently the supply of blood rich in oxygen to the arms and the upper part of the body is strongly stimulated. On the other hand, the person in question no longer needs to operate the mouse with his arms, so that all kinds of RSI complaints as described above are prevented.

It should be noted that the terms "convex" and "concave" relate to curved surfaces having one radius as well as to surfaces having a radius which varies along the surface. Consequently, the invention is not limited to convex and concave surfaces having one radius, but it may also extend to curved surfaces having an ellipsoidal shape, a parabolic shape or another curved shape.

More in particular, according to one embodiment the seat is movable in at least two orthogonal directions relative to the chassis.

In one embodiment, the seat may comprise an upright ring formed on the convex part of the seat, which ring limits the movement of the seat relative to the chassis to a particular angular range. This furthermore prevents fingers, clothes etc. getting wedged.

It has become apparent that in order to achieve an effective control of the moue pointer on the display screen, the seat must be movable through an angle of 10° - 20° relative to the chassis.

A smooth and effective movement of the seat on the chassis can be obtained in that the convex part of the seat can be supported on the convex part of the chassis via ball bearings in one embodiment.

In order to achieve an effective control of the mouse pointer (cursor) on the display screen, the chair may according to the invention be characterized in that the ball bearings form part of the control means.

Furthermore, said means may be mounted at least in the seat of the chair, and a specific embodiment of the chair is characterized in that said means comprise at least a balance switch or tumbler switch, for example a mercury switch.

In another embodiment, the control means control the cursor (pointer) on the display screen by remote control. The remote control means may be optical control means or electromagnetic control means.

On the other hand, the chair according to the invention, which is furthermore fitted with two armrests, may be characterized in that said armrests are provided with means for (un)locking the movable seat relative to the chassis. The hinged joints may be made up of snap hinges. Thus the user can utilise his chair in a quick and effective manner for controlling the cursor on the display screen and, if the computer is not used for a particular period of time, locking the movable seat in position relative to the chassis, so that the chair are can also be used as an ordinary chair in this position.

It has become apparent that in order to achieve an ergonomic seating position, which is desirable with a view to preventing RSI complaints, the convex part of the seat preferably forms part of a fictitious sphere, whose centre is located between the shoulder blades of a person seated on the chair.

It has been established by experiment that the radius R of the fictitious sphere ranges from 40-120 cm, preferably it is 75 cm.

The invention will be explained in more detail hereinafter with reference to a drawing, in which:
Figures 1A-1C show a first embodiment of an ergonomic chair according to the invention (rear side view);
Figures 2A-2C show the embodiment of the ergonomic chair of Figures 1A - 1C (side view);
Figure 3 shows another embodiment of an ergonomic chair according to the invention; and
Figure 4 shows yet another embodiment of an ergonomic chair according to the invention.

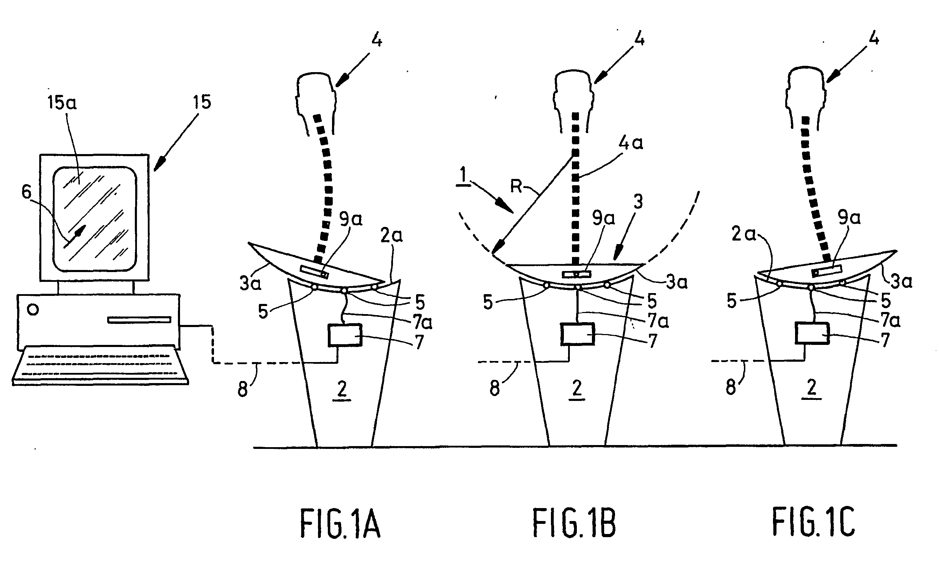

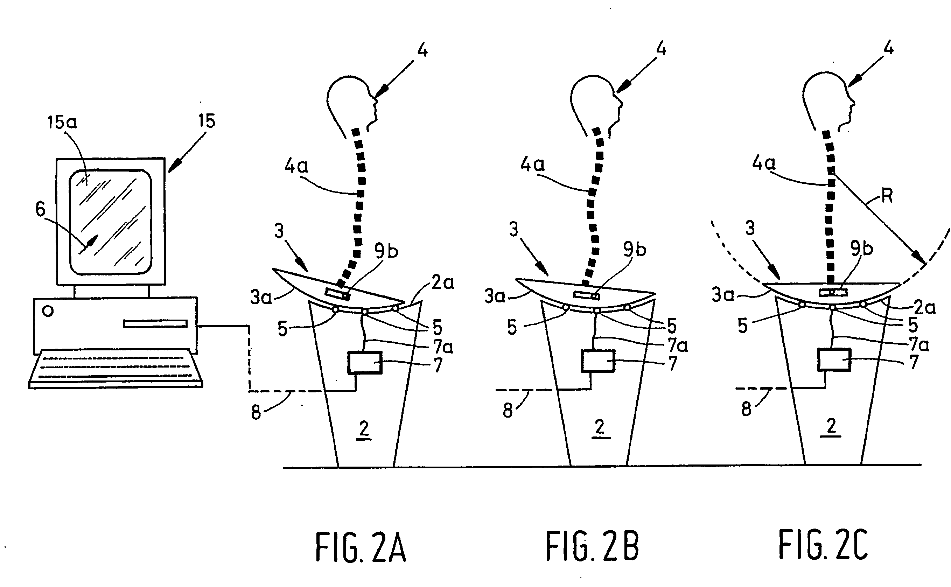

In Figures 1A-1C and 2A-2C an embodiment of an ergonomic chair according to the invention is shown in rear views and in side view, respectively.

The chair is schematically represented and indicated by numeral 1. The chair comprises at least at chassis 2 and a seat 3, on which a person 4 (schematically shown) is seated. In Figures 1A-1C and 2A-2C, only the vertebral column 4a and the head of the person are schematically shown. The chair comprises means (schematically represented by the rectangle indicated at 7), which means are connected to a suitable connector (not shown) of a computer 5 via suitable signal lines. Since the means 7 function to convert movements of the chair into control signals 8 for controlling the cursor (mouse pointer) 6 on the display screen 5, the connector of the computer 5, to which the control means 7 are connected, may be a well-known COM port or PS/1 connector, for example, which is specifically intended for connecting a mouse pointer device.

According to the invention the seat 3 comprises a convex part 3a, which can be movably accommodated in a corresponding part 2a of the chassis 2 having a complementary concave shape. More in particular, said convex and said concave part of the seat 3 and said chassis 2, respectively, are geared to each other in such a manner that the seat 3 can move in at least two orthogonal directions relative to the chassis 2. The angle through which the seat can move relative to the chassis preferably ranges from 10° - 20° (established by experiment).

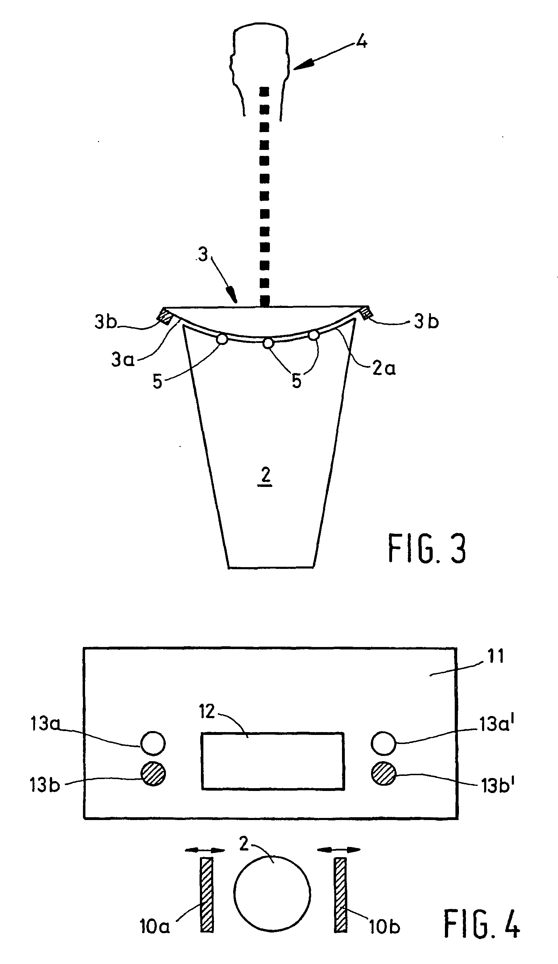

The radius of movement of the seat is limited to this range by mechanical means, for example - as shown in Figure 3 - by means of an upright ring 3b. Said ring 3b is formed on the convex part 3a of the seat 3 and extends circumferentially. The ring 3b forms a stop for limiting the maximum movement of the seat 3 relative to the chassis 2. In addition to that, the ring 3b functions as a protective device to prevent the occupant's clothes and fingers from getting wedged between the seat 3 and the chassis 2.

In one embodiment, which is shown in Figures 1A-1C and Figures 2A-2C, the convex part 3a of the seat 3 can be movably accommodated in the convex part 2a of the chassis 2 via ball bearings 5. Said ball bearings 5 are present at the location of the mating area between the convex part of the seat 3 and the concave part of the chassis 2. As Figures 1A - 1C and Figures 2A - 2C show, the ball bearings, at least one of said ball bearings, forms part of the control means 7. To this end the ball bearing 5 is provided with suitable detecting means or sensors, which convert the rotary movement of the ball bearing 5 into suitable control signals via a connection 7a, which control signals are subsequently used by the control means 7 for controlling the mouse cursor (pointer) 6 on the display screen 5a via the connection 8.

In another embodiment, which is shown in Figures 1A-1C and Figures 2A-2C, the control means 7 furthermore comprises one or more switches 9a-9b mounted in the seat 3 of the chair 1.

Movements to the left and to the right can be detected by means of the balance switch 9a and be converted by the control means 7 into suitable control signals for moving the cursor 6 to the left and to the right, respectively, on the display screen. Likewise, movements to the rear and to the front of the seat 3 can be detected by means of the balance switch 9b (Figures 2A - 2C) and be converted by the control means 7 into suitable control signals 8 for moving the mouse cursor down and up, respectively, on the display screen 5a. To this end, both the balance switch 9a and the balance switch 9b are connected to the control means 7 by means of suitable cables (not shown).

Said movements can also be converted by the ball bearing 5, of course, which bearing is connected to the control means 7 by means of the signal wire 7a.

In another embodiment, on the other hand, the control means 7 control the cursor (pointer) 6 on the display screen 5a in a contactless manner. The contactless control means may be optical control means, in which case one or more light-emitting elements, for example LEDs, which co-operate with light-receiving sensors, are mounted at the location of the mating area 2a - 3a between the concave part 2a and the convex part 3a. The movement of the light-emitting elements and the light-receiving sensors relative to each other caused by the movement of the seat 3 relative to the chassis 2 is converted into a change in the position of the cursor 6 on the display screen 5a.

The control means 7 may also be electromagnetic control means, comprising one or more electromagnetic coils that cooperate with magnets. Movement of a magnet with respect to an electromagnetic coil will lead to an electrical signal according to the principle of electromagnetic induction, on the basis of which the cursor 6 is positioned on the display screen 5a.

The curvature of the convex part 3a of the seat 3 forms part of a fictitious sphere, whose centre is preferably located between the shoulder blades of the person 4 present on the seat 3. The radius R of said fictitious sphere may range from 40-120 cm, preferably it is 70 cm. All this as shown in Figures 1A-1C and 2A-2C, respectively.

Figure 4 shows a supporting surface 11, for example a desktop, from above. Present behind the desktop 11 is the chair 2 according to the invention, which is provided with armrests 10a and 10b, which, in accordance with the invention, can be moved reciprocatingly (see the double arrows in Figure 4) for (un)locking the seat relative to the chassis.

According to the invention, the mouse pointer is controlled by the chair rather than by the usual mouse. In this embodiment, the well-known mouse buttons are large control buttons 13a and 30b placed beside the keyboard 12, with the button 13a performing the function of "left-hand mouse button" and the button 13b performing the function of "right-hand mouse button". Depending on the physical possibilities of the user (he may be left-handed or right-handed or be handicapped on the left or on the right, and consequently be immobile on that side), the mouse buttons may be placed on the left (13a-13b) or on the right (13a'-13b'). The large control buttons only require a low coordinating capacity of the user (which is favourable if the user should have a handicap) and do not place a strain on the wrist joint, the tendons and the tendon sheaths as described above, since the buttons can be controlled with a clenched fist or hand.

It will be understood that RSI complaints can be prevented with this design of an ergonomic chair, the more so because the head and the shoulders of the person 4 do not move during any of the movements of the seat 3 as a result of the convex shape of the seat 3. This enables the user not only to view the display screen 5a more at ease, but in addition the vertebral column and in particular the shoulders of the user are not strained unnecessarily, which might lead to RSI complaints in the shoulders, the arms and/or the hands.

In addition to that, such a chair is very suitable for use by handicapped persons, since it is usually easier for persons who have a handicap to move the mouse pointer via the pelvis or the (lower) back. This is certainly the case with persons who have a hand or arm handicap, since higher coordinative skills are required in particular of the hand, which skills are not available due to handicap of the hand or the arm.

In addition to that, such a chair may be very suitable for playing computer games and video games, because the perception of the game can be significantly enhanced during play if the game can be played by choosing a variable angle of inclination. Think of space travel/flight simulation games, car racing games, skiing games, surfing games etc. etc. in this connection.

## Claims

1. A chair comprising at least a chassis (2); and a seat (3), as well as means (7) suitable for converting chair movements into control signals (8) for controlling a cursor (pointer) (6) on a display screen (5a), **characterized in that** the seat (3) comprises a convex part (3a), which part can be movably accommodated in a corresponding part (2a) of the chassis (2) having a complementary concave shape, and **in that** the means (7) for controlling the cursor are at least in part disposed at the location of the mating area between said convex and concave parts.

2. A chair according to claim 1, **characterized in that** the seat can move in at least two orthogonal directions relative to the chassis.

3. A chair according to claim 1 or 2, **characterized in that** the seat comprises an upright ring formed on the convex part of the seat, which ring limits the movement of the seat relative to the chassis to a particular angular range.

4. A chair according to claim 3, **characterized in that** the seat can move through an angle of 10°-20° relative to the chassis.

5. A chair according to any one or more of the preceding claims, **characterized in that** the convex part of the seat can be supported on the convex part of the chassis via ball bearings (5).

6. A chair according to claim 5, **characterized in that** said ball bearings (5, 7a) form of the control means (7).

7. A chair according to any one or more of the preceding claims, **characterized in that** said means (9a, 9b) are mounted at least in the seat.

8. A chair according to any one or more of the preceding claims, **characterized in that** said means comprise at least a balance switch or tumbler switch (9a, 9b), for example a mercury switch.

9. A chair according to any one or more of the preceding claims, **characterized in that** the control means (7) control the cursor (pointer) (6) on the display screen in a contactless manner.

10. A chair according to claim 9, **characterized in that** said contactless control means (7) are optical control means.

11. A chair according to claim 9, **characterized in that** said contactless control means (7) are electromagnetic control means.

12. A chair according to any one or more of the preceding claims, in which the chair comprises two armrests, **characterized in that** said armrests are provided with means for (un)locking the seat relative to the chassis.

13. A chair according to claim 12, **characterized in that** the hinged joints are made up of snap hinges.

14. A chair according to any one or more of the preceding claims, **characterized in that** the convex part of the seat forms part of a fictitious sphere, whose centre is located between the shoulder blades of a person (4) seated on the chair.

15. A chair according to claim 14, **characterized in that** the radius R of said fictitious sphere ranges from 40-120 cm, preferably it is 75 cm.

## Patentansprüche

1. Stuhl mit mindestens einem Untergestell (2) und einem Sitz (3) sowie Mitteln (7), die sich zur Umwandlung von Stuhlbewegungen in Steuersignale (8) zur Steuerung eines Kursors (Zeigers) (6) auf einem Bildschirm (5a) eignen, **dadurch gekennzeichnet, dass** der Sitz (3) einen konvexen Teil (3a) umfasst, der beweglich in einem entsprechenden Teil (2a) des Untergestells (2) mit einer komplementären konkaven Form aufgenommen werden kann, und dass die Mittel (7) zur Steuerung des Kursors zumindest teilweise an der Stelle des Pass-Bereichs zwischen dem konvexen und dem konkaven Teil angeordnet sind.

2. Stuhl nach Anspruch 1, **dadurch gekennzeichnet, dass** sich der Sitz in mindestens zwei orthogonalen Richtungen bezüglich des Untergestell bewegen kann.

3. Stuhl nach Anspruch 1 oder 2, **dadurch gekennzeichnet, dass** der Sitz einen aufrechten Ring umfasst, der an dem konvexen Teil des Sitzes ausgebildet ist und die Bewegung des Sitzes bezüglich des Untergestells auf einen bestimmten Winkelbereich begrenzt.

4. Stuhl nach Anspruch 3, **dadurch gekennzeichnet, dass** sich der Sitz über einen Winkel von 10° - 20° bezüglich des Untergestells bewegen kann.

5. Stuhl nach einem oder mehreren der vorhergehenden Ansprüche, **dadurch gekennzeichnet, dass** der konvexe Teil des Sitzes über Kugellager (5) an dem konvexen Teil des Untergestells gestützt werden kann.

6. Stuhl nach Anspruch 5, **dadurch gekennzeichnet, dass** die Kugellager (5, 7a) die Steuermittel (7) bilden.

7. Stuhl nach einem oder mehreren der vorhergehenden Ansprüche, **dadurch gekennzeichnet, dass** die Mittel (9a, 9b) mindestens in dem Sitz angebracht sind.

8. Stuhl nach einem oder mehreren der vorhergehenden Ansprüche, **dadurch gekennzeichnet, dass** die Mittel mindestens einen Ausgleichsschalter oder Kippschalter (9a, 9b), zum Beispiel einen Quecksilberschalter, umfassen.

9. Stuhl nach einem oder mehreren der vorhergehenden Ansprüche, **dadurch gekennzeichnet, dass** die Steuermittel (7) den Kursor (Zeiger) (6) auf dem Bildschirm kontaktlos steuern.

10. Stuhl nach Anspruch 9, **dadurch gekennzeichnet, dass** die kontaktlosen Steuermittel (7) optische Steuermittel sind.

11. Stuhl nach Anspruch 9, **dadurch gekennzeichnet, dass** die kontaktlosen Steuermittel (7) elektromagnetische Steuermittel sind.

12. Stuhl nach einem oder mehreren der vorhergehenden Ansprüche, wobei der Stuhl zwei Armlehnen umfasst, **dadurch gekennzeichnet, dass** die Armlehnen mit Mitteln zum Ent- bzw. Verriegeln des Sitzes bezüglich des Untergestells vorgesehen sind.

13. Stuhl nach Anspruch 12, **dadurch gekennzeichnet, dass** die Scharniergelenke aus Schnappscharnieren bestehen.

14. Stuhl nach einem oder mehreren der vorhergehenden Ansprüche, **dadurch gekennzeichnet, dass** der konvexe Teil des Sitzes Teil einer fiktiven Kugel ist, deren Mitte sich zwischen den Schulterblättern einer auf dem Stuhl sitzenden Person (4) befindet.

15. Stuhl nach Anspruch 14, **dadurch gekennzeichnet, dass** der Radius R der fiktiven Kugel zwischen 40 und 120 cm liegt und vorzugsweise 75 cm beträgt.

## Revendications

1. Chaise comprenant au moins un châssis (2) ; et un siège (3), de même que des moyens (7) appropriés pour convertir les mouvements de la chaise en signaux de commande (8) afin de commander un curseur (pointeur) (6) sur un écran d'affichage (5a), **caractérisée en ce que** le siège (3) comprend une partie convexe (3a), laquelle partie peut être logée de manière mobile dans une partie correspondante (2a) du châssis (2) ayant une forme concave complémentaire, et **en ce que** le moyen (7) pour commander le curseur est disposé au moins en partie à l'emplacement de la zone d'accouplement entre les parties convexe et concave.

2. Chaise selon la revendication 1, **caractérisée en ce que** le siège peut bouger dans au moins deux directions orthogonales par rapport au châssis.

3. Chaise selon la revendication 1 ou 2, **caractérisée en ce que** le siège comprend une bague verticale formée sur la partie convexe du siège, laquelle bague limite le mouvement du siège par rapport au châssis à une plage angulaire particulière.

4. Chaise selon la revendication 3, **caractérisée en ce que** le siège peut bouger sur un angle de 10° à 20° par rapport au châssis.

5. Chaise selon l'une quelconque des revendications précédentes, **caractérisé en ce que** la partie convexe du siège peut être supportée sur la partie convexe du châssis au moyen de roulements à billes (5).

6. Chaise selon la revendication 5, **caractérisée en ce que** lesdits roulements à billes (5, 7a) forment les moyens de commande (7)

7. Chaise selon l'une quelconque ou plusieurs des revendications précédentes, **caractérisée en ce que** lesdits moyens (9a, 9b) sont montés au moins dans le siège.

8. Chaise selon l'une quelconque ou plusieurs des revendications précédentes, **caractérisée en ce que** lesdits moyens comprennent au moins un interrupteur à bascule ou un interrupteur tumbler (9a, 9b), par exemple un interrupteur à mercure.

9. Chaise selon l'une quelconque ou plusieurs des revendications précédentes, **caractérisée en ce que** les moyens de commande (7) commandent le curseur (pointeur) (6) sur l'écran d'affichage d'une manière sans contact.

10. Chaise selon la revendication 9, **caractérisée en ce que** lesdits moyens de commande sans contact (7) sont des moyens de commande optiques.

11. Chaise selon la revendication 9, **caractérisée en ce que** lesdits moyens de commande sans contact (7) sont des moyens de commande électromagnétiques.

12. Chaise selon l'une quelconque ou plusieurs des revendications précédentes, dans laquelle la chaise comprend deux accoudoirs, **caractérisée en ce que** lesdits accoudoirs sont pourvus de moyens pour (dé)bloquer le siège par rapport au châssis.

13. Chaise selon la revendication 12, **caractérisée en ce que** les joints articulés sont constitués de charnières à déclic.

14. Chaise selon l'une quelconque des revendications précédentes, **caractérisée en ce que** la partie convexe du siège fait partie d'un sphère fictive, dont le centre est situé entre les omoplates d'une personne (4) assise sur la chaise.

15. Chaise selon la revendication 14, **caractérisée en ce que** le rayon R de ladite sphère fictive se situe entre 40 et 120 cm, étant de préférence de 75 cm.
